# EUROPEAN PATENT APPLICATION

(11) **EP 2 233 255 A2**
(43) Date of publication of application: **29.09.2010**
(21) Application number: 09011451.3
(22) Date of filing: 07.09.2009
(51) Int. Cl.: B25J 9/16

(54) **Data transformation network apparatus and robot controlling system and method using the same**

(30) Priority: 23.03.2009 KR 20090024449
(71) Applicant: KIST Korea Institute of Science and Technology, Seongbuk-gu Seoul 136-791 (KR)
(72) Inventor: Cha, Young Su, Busan 606-080 (KR); You, Bum Jae, Seoul 139220 (KR)
(74) Representative: Diehl & Partner GbR

(57) **Abstract**

The present invention relates to a data transformation network apparatus, and robot controlling method capable of communicating with a control computer for controlling of the robot and motor drives for controlling of motors, and robot controlling system using the same. The data transformation network apparatus includes an upper interface configured to communicate in first speed with a control computer to receive a control data packet from the control computer; a plurality of lower interfaces configured to communicate in second speed slower than the first speed with a plurality of motor drives; and a signal processing unit in communication with the upper interface and the plurality of lower interfaces, the signal processing unit being configured to divide the control data packet into a plurality of control data, and transmit the plurality of control data to the plurality of motor drives through the plurality of lower interfaces.

## Description

The present application claims priority from Korean Patent Application No. 10-2009-0024449 filed on March 23, 2009, the entire subject matter of which is incorporated herein by reference.

### BACKGROUND OF THE INVENTION

### [Technical Field]

The present invention generally relates to robot controlling systems, and more particularly to a data transformation network apparatus, and a robot controlling system and method using the data transformation network apparatus.

### [Background Art]

A humanoid robot is a robot with an appearance based on the human body. The humanoid robot may walk on two legs like human beings and includes joints attached to the hands, arms, neck, legs, etc. for allowing movement thereof and motors for actuating the joints. For example, the humanoid robot named "MAHRU" developed by the Korea Institute of Science and Technology is composed of 35 motors for actuating joints.

The humanoid robot also includes motor drives for controlling an operation of at least one of the motors. The motors may be independently controlled by the motor drives. The motor drives are controlled by a control computer which may be externally or internally installed on the humanoid robot.

In a conventional robot control system, the control computer and the motor-drives communicate directly with each other through a single network-based communication system. In this case, if the network is configured with a high speed communication system of over 10 Mbps, a communication error may increase as the communication speed increases. On the other hand, if the network is configured with a low-speed communication system of below 1 Mbps in order to deal with noise stability, stable communication may be achieved. In this case, however, data transmitting time increases. Usually, since a plurality of motor drives are connected to one control computer, the data transmitting time increases in relation to the number of the motor drives.

### BRIEF DESCRIPTION OF THE DRAWINGS

FIG. 1 a schematic diagram showing an illustrative embodiment of a robot controlling system.

FIG. 2 is a schematic diagram showing a structure of a data packet.

FIG. 3 is a schematic diagram showing a data transformation network board.

FIG. 4 is a schematic diagram showing data write and read operations.

FIGS. 5 and 6 are schematic diagrams showing examples of a robot control system.

FIGS. 7 and 8 are schematic diagrams showing examples of a data transformation network board.

### DETAILED DESCRIPTION OF THE INVENTION

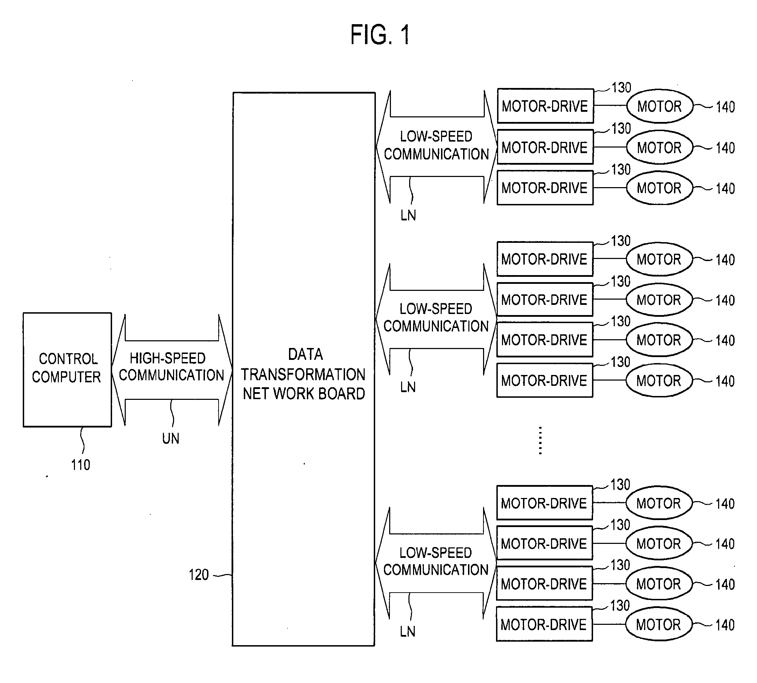

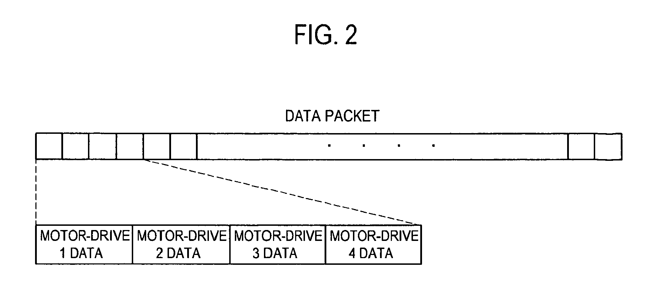

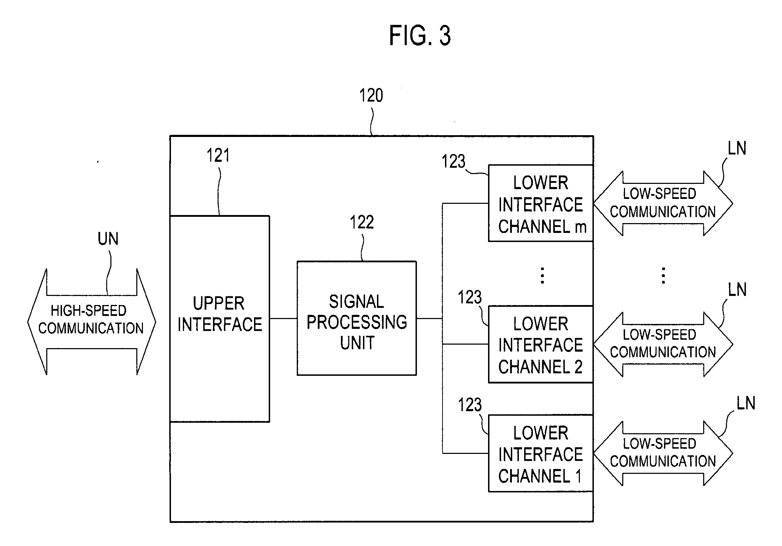

FIG. 1 is a schematic diagram showing an illustrative embodiment of a robot controlling system. FIG. 2 is a schematic diagram showing structure of a data packet. And, FIG. 3 is a schematic diagram showing a data transformation network board.

As shown in FIG. 1, the robot controlling system may include a control computer 110, a data transformation network board 120, a plurality of motor drives 130 and a plurality of motors 140 coupled to the plurality of motor-drives 130. The control computer 110 and the data transformation network board 120 communicate with each other by using a high speed communication UN. The high speed communication is ranged from 10Mbps to 1Gbps. The data transformation network board 120 and the plurality of motor drives 130 communicate with each other using a low speed communication LN. The low speed communication is ranged from 1kbps to 10Mbps.

The control computer 110 may send a control data packet to the data transformation network board 120 and receive a response data packet from the data transformation network board 120. The control computer 110 may be in communication with the data transformation network board 120. The control data packet or the response data packet may be structured as illustrated in FIG. 2. In one embodiment, the control data packet includes a control data MOTOR-DRIVE 1 DATA, MOTOR-DRIVE 2 DATA ... for controlling the plurality of motor drives 130, and the response data packet includes a plurality of response data MOTOR-DRIVE 1 DATA, MOTOR-DRIVE 2 DATA ..., which are received from the plurality of motor-drives 130.

Referring to FIG. 3, the data transformation network board 120 may include an upper interface 121, a signal processing unit 122 and at least one lower interface 123. The upper interface 121 is a unit for communicating with the control computer 110. The at least one lower interface 123 is includes multiple channels for communication with the plurality of motor drives 130. The control computer 110 is in communication with the data transformation network board 120 using the high-speed communication UN, and the plurality of motor drives 130 are connected to the data transformation network board 120 using the low-speed communication LN. For example, the low-speed communication may include a controller area network (CAN) communication. The CAN communication is a serial bus network standard designed to allow devices, which are built in the robot controlling system, such as a sensor, a starter and a motor to communicate with each other. An address assignment technology, which is usually adopted in the Ethernet communication, is not used in the CAN communication. In the CAN communication, data is transmitted simultaneously to all nodes such as the devices built in the robot controlling system using a unique identifier. Each device may decide whether each device processes the data or not according to the unique identifier. The priority of data may be decided using a competition principle. It is possible to transmit the data without interruption in the CAN communication, which is different from the Ethernet communication. The CAN communication was designed specifically for automotive applications. Since the CAN communication is designed to have a series of sensors, it may be observed whether the automotive applications operate appropriately and safely. The CAN communication may be used in an open type communication system for an intelligent peripheral device and in an internal communication system for microcontrollers. The CAN communication may in some embodiments be standardized with ISO 11519 for maximum speed until 125 Kbps and standardized with ISO 19898 for maximum speed until 1 Mbps. The foregoing are only examples for configurations of the CAN communication and other configurations can also be used.

Referring back to FIG. 1, the motor drives 130 may in some embodiments be divided into a plurality of groups and the plurality of groups may be connected to the channels, so that the plurality of control data and the plurality of response data may be processed in parallel when the plurality of motor drives 130, which are connected to the data transformation network board 120, are provided. The plurality of groups of the motor drives 130 may be determined by considering a control routine period, which may mean data transmission or reception (data communication) time. For example, assuming that N motor-drives 130 are installed and 1 ms is required for data transmission or reception between each of the N motor-drives 130 and the data transformation network board 120, N ms may be required for data transmission or reception between all of the N motor-drives 130 and the data transformation network board 120 if the N motor-drives 130 are not divided into multiple groups. But, when the N motor-drives 130 are equally divided into M groups, N/M ms may be required for communication.

Referring back to FIG. 3, the signal processing unit 122 may include a memory (not shown) for storing the control data packet, which is transmitted from the control computer 110, and the response data packet, which is transmitted from the plurality of motor-drives 130. The signal processing unit 122 may divide the control data packet into the control data in relation to the number of the multiple channels and transmit the control data to the corresponding motor drives 130, which are included in each lower interface. Each of the motor drives 130 may form motor driving signals according to the control data, send the motor driving signals to the motors 140, and form the response data including operation results of the motors 140. The motor drives 130 may transmit the response data to the signal processing unit 122. The signal processing unit 122 may combine the plurality of response data received from the plurality of motor drives 130 to form the response data packet. Each of the control data may include motor drive identifications (IDs) for transmitting the control data to the corresponding motor drives 130. The motor drive IDs may include information on the multiple channels of the lower interface 123 and information on the motor drives 130, which are connected to the multiple channels. The motor-drive IDs may be set by two digit numbers. The former digit number may be assigned for identification of the channels of the lower interface 123 and the latter digit number may be assigned for identification of the motor drives 130, which are connected to the channels of the lower interface 123. For example, when the motor drive ID is 23, the control data may be transmitted to the third motor drive 130 of the second channel of lower interface 123. The signal processing unit 122 may include a DSP (digital signal processor) or FPGA (field programmable gate array).

Referring back to FIG. 1, each of the motor drives 130 may receive the control data from the data transformation network board 120 and transmit the response data to the data transformation network board 120. The plurality of motor drives 130 may control the motors 140, which are connected to the motor drives 130, respectively, according to the control data. The motor drives 130 may form the response data including the operation results of the motors 140, and so on.

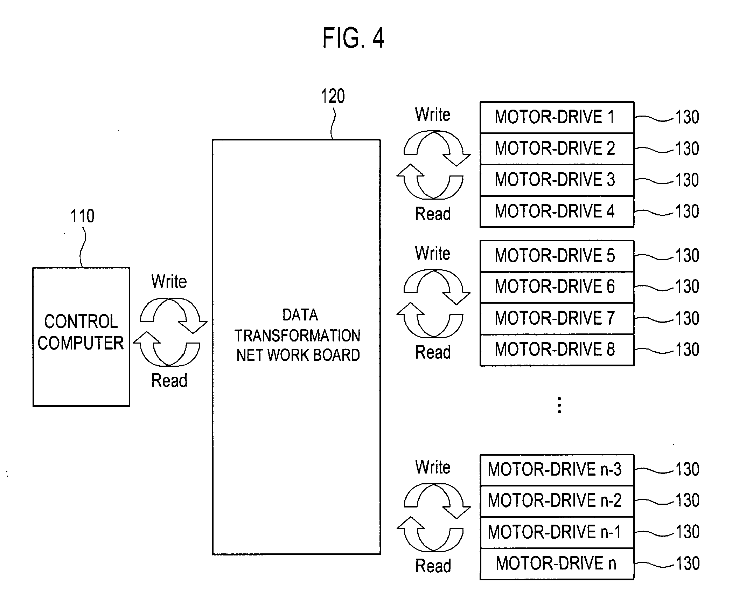

In one embodiment as shown in FIG. 4, data write and read operations between the control computer 110 and the data transformation network board 120 may be performed by using high-speed communication. The data write and read operations between the data transformation network board 120 and the plurality of motor drives 130 may be performed by using low-speed communication. The control computer 110 may combine the control data, when it is needed to perform the data write operation of the control data. The control computer 110 may not directly transmit the control data packet to the motor drives 130 but transmit the control data packet to the motor drives 130 via the data transformation network board 120. The control data packet, which is transmitted to the data transformation network board 120, is stored in the memory (not shown) of the signal processing unit 122 as shown in FIG. 3. The control data included in the control data packet may be transmitted to corresponding motor drives 130 through the lower interface 123 as shown in FIG. 3 at a predetermined period. The data transformation network board 120 may read the response data of the motor drives 130 and store the response data in the memory of the signal processing unit 122 at a predetermined period. The response data, which is stored in the memory of the signal processing unit 122, are combined to form the response data packet as illustrated in FIG. 2. The control computer 110 may perform the data read operation of the response data at a predetermined period.

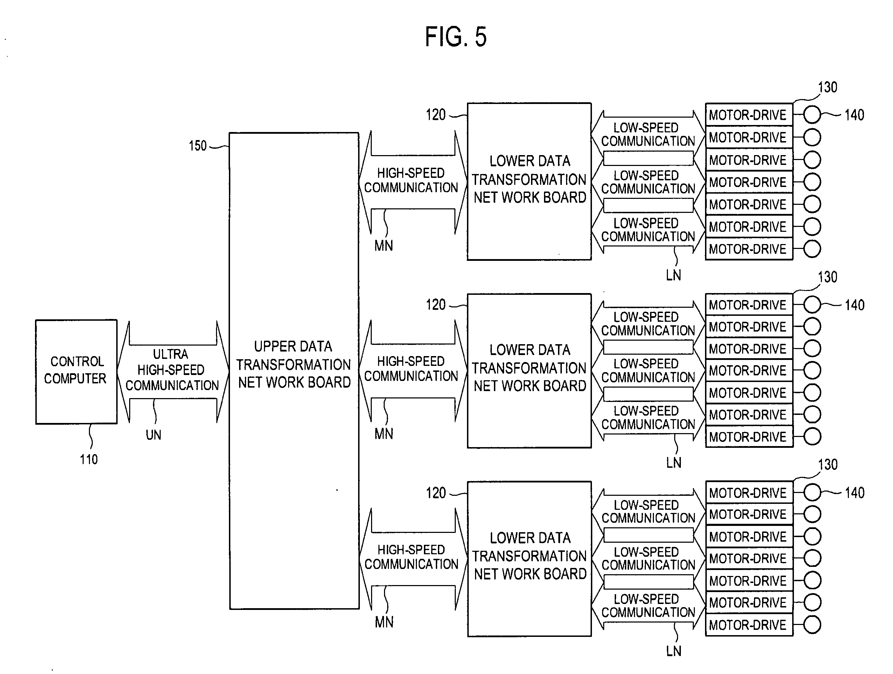

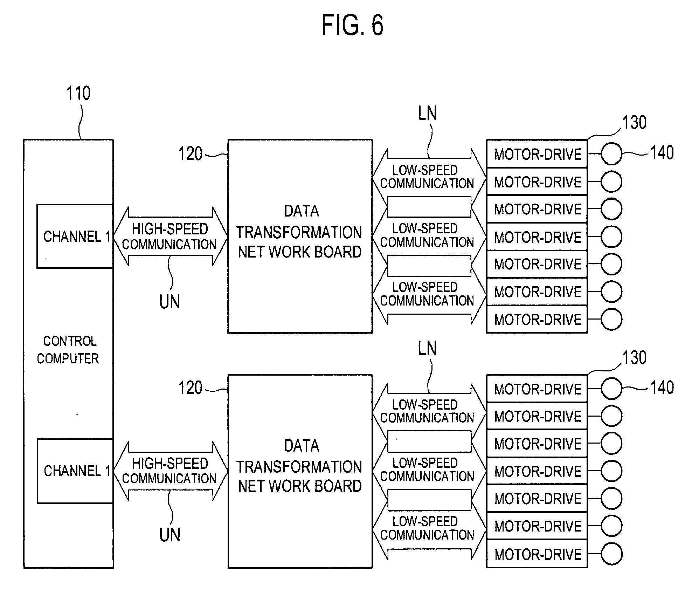

FIGS. 5 and 6 are schematic diagrams showing examples of a robot control system. The data transformation network board of the robot control system may be in one embodiment hierarchically structured. For example, in the robot controlling system of FIG. 5, the control computer 110 may transmit the control data packet to an upper data transformation network board 150 for controlling a robot, and receive the response data packet from the upper data transformation network board 150. The upper data transformation network board 150 may divide the control data packet into intermediate control data packets to match the number of lower data transformation network boards 120 and transmit the intermediate control data packets to the corresponding lower data transformation network boards 120. The upper data transformation network board 150 may receive intermediate response data packets from the lower data transformation network boards 120 and combine the intermediate response data packets to form the response data packet. The lower data transformation network boards 120 may divide the intermediate control data packets into control data, and transmit the control data to the corresponding motor drives 130. The lower data transformation network boards 120 may combine the response data to form intermediate response data packets received from the motor-drives 130. FIG. 6 is a schematic diagram showing an example of a robot control system having two data transformation network boards 120 in parallel. In the robot control system of FIG. 6, the control computer 110 may form two control data packets and transmit each control data packet to the data transformation network boards 120. The control computer 110 receives two response data packets from the data transformation network boards 120. Each of the data transformation network boards 120 may divide each control data packet into control data and transmit the control data to the corresponding motor drives 130. Each data transformation network board 120 may receive the response data from the motor drives 130 and combine the response data to form the response data packets.

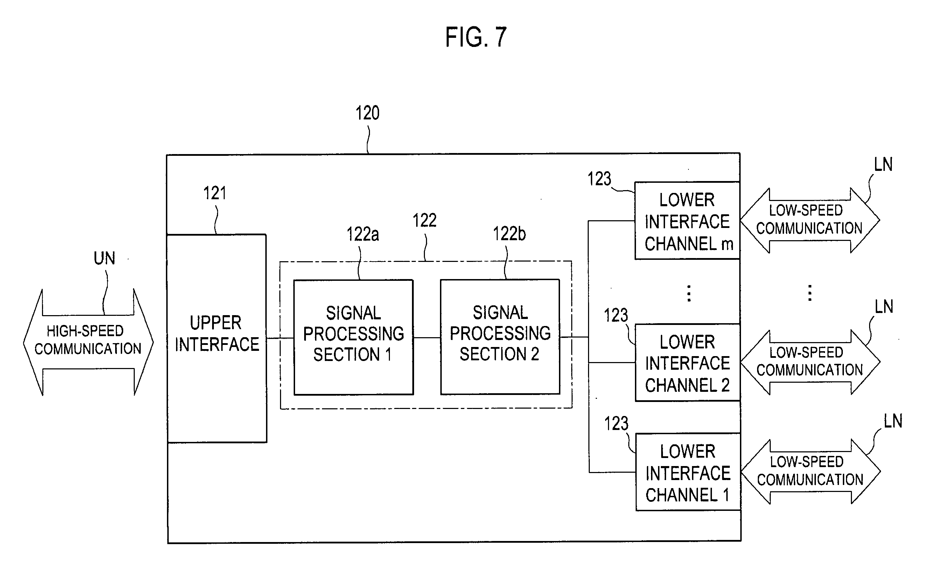

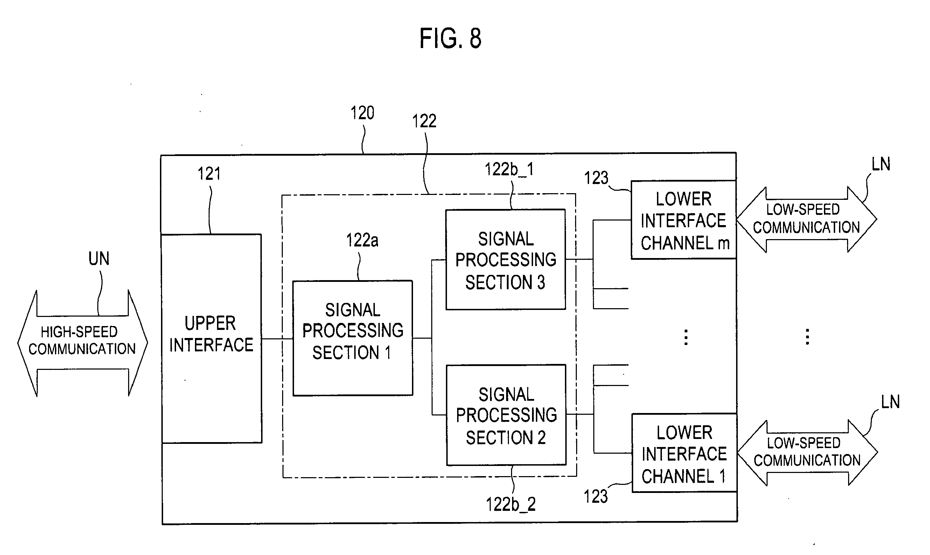

FIGS. 7 and 8 are schematic diagrams showing examples of a data transformation network board. The signal processing unit 122 of the data transformation network board 120 may be hierarchically structured. In the robot control system, the signal processing unit 122 may include at least one signal processing section. The signal processing unit 122 of the FIG. 7 may include first and second signal processing sections 122a, 122b. The first signal processing section.122a may perform signal processing upon the data received or transmitted from/to the upper interface 121 and the second signal processing section 122b may perform signal processing upon the data received or transmitted from/to the lower interface 123. The signal processing unit 122 of the FIG. 8 may include two second signal processing sections 122b_1, 122b_2, so that it becomes possible to decrease the load on the signal processing unit 122 due to multiple channel connections to the lower interface 123.

Any reference in this specification to "one embodiment," "an embodiment," "example embodiment," "illustrative embodiment," etc. means that a particular feature, structure or characteristic described in connection with the embodiment is included in at least one embodiment of the present invention. The appearances of such phrases in various places in the specification are not necessarily all referring to the same embodiment. Further, when a particular feature, structure or characteristic is described in connection with any embodiment, it is submitted that it is within the purview of one skilled in the art to affect such feature, structure or characteristic in connection with other ones of the embodiments.

Although embodiments have been described with reference to a number of illustrative embodiments thereof, it should be understood that numerous other modifications and embodiments can be devised by those skilled in the art that will fall within the spirit and scope of the principles of this disclosure. More particularly, numerous variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A data transformation network apparatus comprising:
an upper interface configured to communicate in first speed with a control computer to receive a control data packet from the control computer;
a plurality of lower interfaces configured to communicate in second speed slower than the first speed with a plurality of motor drives; and
a signal processing unit in communication with the upper interface and the plurality of lower interfaces, the signal processing unit being configured to divide the control data packet into a plurality of control data, and transmit the plurality of control data to the plurality of motor drives through the plurality of lower interfaces.

2. The data transformation network apparatus of claim 1, wherein the plurality of lower interfaces are further configured to communicate with the plurality of motor drives to receive a plurality of response data from the plurality of motor drives, the signal processing unit is configured to combine the plurality of response data to form the response data packet, and the upper interface is further configured to transmit the response data packet to the control computer.

3. The data transformation network apparatus of claim 2, wherein the signal processing unit is further configured to process the plurality of control data and the plurality of response data in parallel.

4. The data transformation network apparatus of claim 3, wherein the plurality of control data include motor drive IDs for transmitting the plurality of control data to the plurality of corresponding motor drives.

5. The data transformation network apparatus of claim 4, wherein the signal processing unit comprises;
a first signal processing section configured to divide the control data packet into the plurality of control data; and
at least one second signal processing section configured to transmit the plurality of control data to the corresponding motor drives through the plurality of lower interfaces.

6. The data transformation network apparatus of claim 5, wherein the at least one second signal processing section is further configured to combine the plurality of response data to form the response data packet; and the first signal processing section is further configured to transmit the response data packet to the control computer through the upper interface.

7. A robot controlling system comprising;
a control computer;
a data transformation network apparatus of any one of claims 1 to 6 in communication with the control computer; and
a plurality of motor drives in communication with the data transformation network apparatus, the plurality of motor drives being configured to form driving signals for driving a plurality of motors according to the plurality of control data.

8. The robot controlling system of claim 7, wherein the plurality of motor drives are further configured to form the plurality of response data.

9. A robot controlling method with a robot controlling system, the method comprising;
transmitting in first speed a control data packet containing a plurality of control data by a control computer within the robot controlling system;
dividing the transmitted control data packet into the plurality of control data by a data transformation network board within the robot controlling system; and
transmitting in second speed slower than the first speed the plurality of control data to a plurality of motor drives through a plurality of lower interfaces within the robot controlling system by the data transformation network board.

10. The robot controlling method of claim 9, the method further comprising:
forming driving signals for driving a plurality of motors according to the plurality of control data by the motor drives.
forming response data containing operation results of the plurality of motors according to the motor driving signals by the motor drives;
combining the response data to form the response data packet by the data transformation network board; and
transmitting the response data packet to the control computer by the data transformation network board.

11. The method of claim 10, wherein the control data includes motor drive IDs for transmitting of the control data to the plurality of corresponding motor drives.

12. A computer readable medium comprising instructions that, when executed by a processor performs a method of controlling a robot, the method implemented in the computer readable medium comprising:
receiving in first speed a control data packet containing a plurality of control data;
dividing the received control data packet into the plurality of control data; and
transmitting in second speed slower than the first speed the plurality of control data to a plurality of motor drives.

13. The computer readable medium of claim 12 further comprising:
forming driving signals for driving a plurality of motors according to the control data;
forming response data containing operation results of the plurality of motors according to the motor driving signals;
combining the response data to form the response data packet; and
transmitting the response data packet to a control computer.
